Europäisches Patentamt

European Patent Office

Office européen des brevets

(11) Numéro de publication: **0 125 997**
**A1**

## (12) DEMANDE DE BREVET EUROPEEN

(21) Numéro de dépôt: **84400954.8**

(22) Date de dépôt: **10.05.84**

(51) Int. Cl.³: **A 01 C 1/04**
**A 01 G 13/02**

(30) Priorité: **11.05.83 FR 8307883**

(43) Date de publication de la demande:
**21.11.84 Bulletin 84/47**

(84) Etats contractants désignés:
**BE CH DE GB IT LI NL**

(71) Demandeur: **Société MEMA**
**62-64, rue Jean-Jaurès**
**F-92800 Puteaux (Hauts-de-Seine)(FR)**

(72) Inventeur: **Meimarakis, Georges**
**3, rue de l'Annonciation**
**F-75016 Paris(FR)**

(74) Mandataire: **Chevallier, Robert Marie Georges**
**Cabinet BOETTCHER 23, rue La Boétie**
**F-75008 Paris(FR)**

(54) Feuille pour semis et paillage simultanés et procédé pour la poser sur le sol.

(57) Feuille pour semis et paillage simultanés et procédé pour la poser sur le sol.

Dans une feuille (1) sont faits des plis (2) de préférence longitudinaux et des poches (7) contenant chacune une graine (8) sont réalisées par adhérence le long d'une ligne (6) des deux parois (3, 4) des plis (2), entre les branches d'une incision (9) en V, l'adhérence étant destructible par une traction exercée transversalement au moment de la pose pour provoquer l'ouverture des plis (2) et la libération des graines (8) qui tombent sur le sol, sous la feuille étalée (1).

Fig.2

EP 0 125 997 A1

Feuille pour semis et paillage simultanés et procédé
pour la poser sur le sol.

L'invention a pour objet une feuille mince, en
matière appropriée, utilisable pour réaliser simultanément
par un simple étalement de cette feuille sur le sol, de
préférence par déroulement d'un rouleau, le semis régulier
de semences et de graines et le paillage du sol. L'invention
concerne aussi un procédé de pose de cette feuille sur le
sol.

On connait déjà des feuilles analogues qui servent
aussi à semer des graines et à pailler le sol ; les feuilles
connues comprennent des moyens de fixation des graines. Ces
moyens sont divers et ils font appel à plusieurs artifices
pour que les graines soient placées dans des conditions de
germination lorsque ces feuilles sont en contact avec le
sol. On emploie très généralement deux feuilles distinctes
superposées ou, au moins, une feuille supérieure favorable
au paillage et des bandes inférieures hydrophiles en matière
poreuse ou se décomposant à l'humidité. Les graines sont
emprisonnées dans des poches entre la feuille supérieure
et la bande inférieure ou entre deux bandes inférieures ;
on compte sur l'humidité du sol pour détruire ces dernières
et libérer les graines, ou du moins les fragiliser suffisamment pour permettre leur déchirure par les jeunes plants
issus de la germination des graines. La feuille supérieure
présente de nombreuses incisions, en correspondance avec
les poches, c'est-à-dire au proche voisinage de celles-ci
afin que les plantes puissent sortir à l'air libre sans
difficulté peu après la germination.

Ces feuilles composites ne sont pas sans inconvénient,
d'une part en raison de la nécessité d'employer deux
matières différentes pour les confectionner, d'autre part
parce que les graines sont libérées de manière plutôt
aléatoire et qu'elles peuvent rester un certain temps - plusieurs jours - avant d'arriver au contact du sol.

L'invention a pour but principal d'apporter une
feuille pour semis et pour paillage qui se distingue clairement des feuilles connues parce qu'elle n'est constituée effectivement que d'une unique feuille et parce que les graines sont mises directement au contact du sol selon les conditions naturelles les plus favorables, au moment même de la pose de la feuille sur le sol.

A partir d'une feuille pour semis et paillage, ayant en des points espacés des poches de retenue de semences et de graines, présentant des incisions faites en correspondance avec ces poches, selon l'invention, les poches sont réalisées au moyen d'adhérence destructible par une simple traction des deux parois rapprochées d'un pli de la feuille.

Dans l'esprit de l'invention, la formation des plis doit s'entendre de la manière la plus générale. On peut concevoir de pincer la feuille en chaque point désiré pour faire apparaître une poche ou la faire apparaître par formage ou thermoformage. Il est plus commode de prévoir au moins un pli et de préférence plusieurs plis parallèles s'étendant chacun de façon continue sur toute une dimension de la feuille. Compte tenu des conditions pratiques actuelles de pose des feuilles de paillage, il est avantageux de prévoir au moins deux plis longitudinaux espacés de la distance séparant deux lignes de semis.

Les poches sont obtenues par l'adhérence des deux parois réalisée le long d'une ligne fermée autour de la graine qui y est enfermée. Cette adhérence se fait par tout moyen convenable (adhésif, soudure, etc...) à condition qu'elle soit assez faible pour être rompue par une traction provoquant l'ouverture du pli.

Une incision est faite dans une paroi au moins de chaque pli au voisinage de chaque poche. Selon un mode de réalisation préféré de l'invention, avec des plis réalisés dans le sens longitudinal de la feuille, chaque incision est une incision en V partant du sommet du pli, intéressant de préférence les deux parois du pli et contenant la poche entre les deux côtés du V.

Selon le procédé de l'invention, quand on pose une feuille telle que définie ci-dessus, on exerce sur elle, lorsqu'elle touche le sol, une traction en sens transversal aux plis qui ouvre ceux-ci vers le sol en rompant l'adhérence des parois ; il en résulte que les graines tombent aussitôt sur le sol et sont recouvertes par la feuille.

Selon un mode de mise en oeuvre du procédé, avec une feuille à plis longitudinaux, on exerce une traction en sens transversal en enfonçant dans le sol les deux parties extrêmes longitudinales de la feuille, par exemple à l'aide d'un premier outil ouvrant une saignée dans le sol, d'une roue enfonçant le bord de la feuille dans cette saignée et d'un second outil refermant cette saignée. De préférence, en cas de deux plis longitudinaux parallèles, on appuie la feuille sur le sol, entre les deux plis, à l'aide d'une roue centrale.

Selon un autre mode de mise en oeuvre du procéeé avec une feuille à plis transversaux, on utilise un frein transversal que l'on applique périodiquement sur la bobine empêchant ainsi le déroulement de la feuille tout en poursuivant le déplacement dans le sens du déroulage. On exerce ainsi sur chaque pli transversal une traction provoquant son ouverture.

On donnera maintenant, sans intention limitative et sans exclure aucune variante, une description de plusieurs exemples de réalisation. On se reportera au dessin annexé dans lequel :

- la figure 1 est une vue de dessus d'un exemple d'une feuille conforme à l'invention,

- la figure 2 est une vue de détail agrandie en coupe selon II-II de la figure 1,

- les figures 3 et 4 montrent respectivement des variantes de plis selon l'invention,

- la figure 5 est une vue illustrant un mode de

4　　　　.　　0125997

mise en oeuvre du procédé de pose de l'invention,

- la figure 6 est une vue de dessus d'une variante de réalisation d'une feuille selon l'invention.

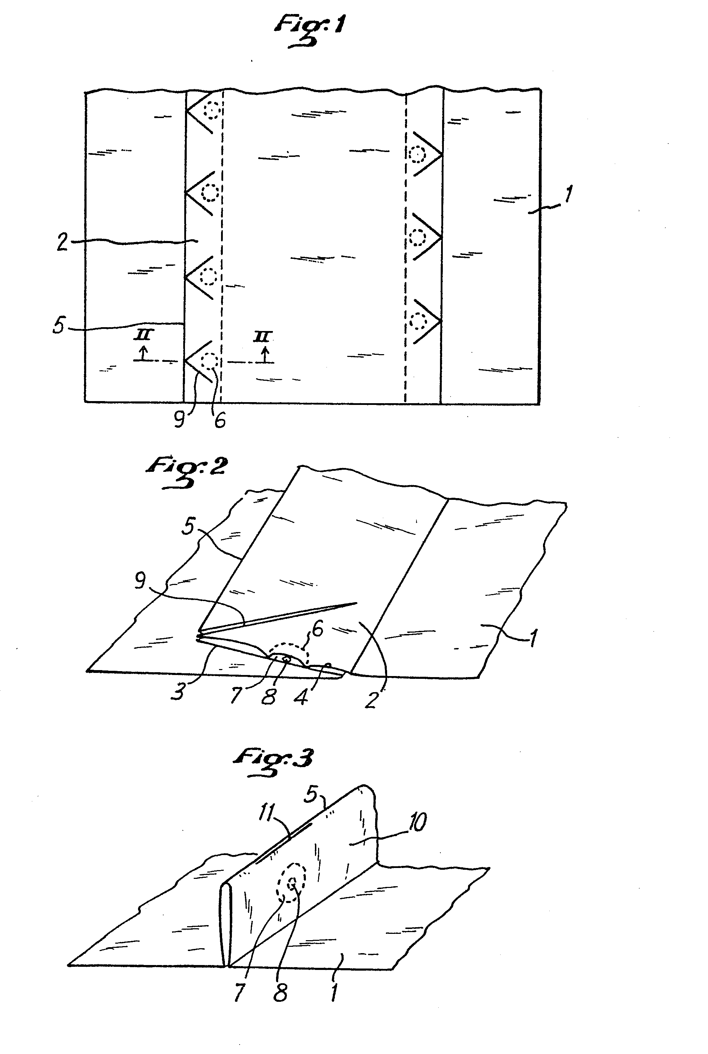

Une unique feuille 1 en matière appropriée, par exemple en polyéthylène, présente des plis longitudinaux 2 (figure 1) ou transversaux 2A (figure 6) qui sont espacés entre eux de la distance qui convient aux lignes de semis. Chaque pli 2 ou 2A comprend deux parois opposées 3, 4 réunies par un sommet 5. Les deux parois 3, 4 sont rendues adhérentes l'une à l'autre le long d'une ligne fermée 6 qui fait apparaître une poche 7 contenant une graine 8. La ligne d'adhérence 6 n'est pas forcément continue, elle peut être composée de points espacés mais assez proches pour empêcher la sortie de la graine 8. L'adhérence s'obtient par tout moyen comme le collage et de préférence par la soudure à chaud. On ne cherche pas à obtenir une adhérence parfaite mais au contraire une adhérence destructible par l'effet d'une traction exercée de façon à provoquer l'ouverture du pli 2 ou 2A. Une soudure par points est avantageuse à cet égard.

Une incision 9 est pratiquée à proximité de chaque poche 7, dans l'une au moins des parois 3, 4, de préférence dans les deux parois. L'invention n'impose rien au sujet des incisions 9, cependant une incision en V partant du sommet 5 du pli est avantageuse parce qu'elle permet de placer la poche 8 dans l'ouverture du V. On obtient après ouverture du pli une incision en croix favorable à la sortie du plant issu de la graine 8.

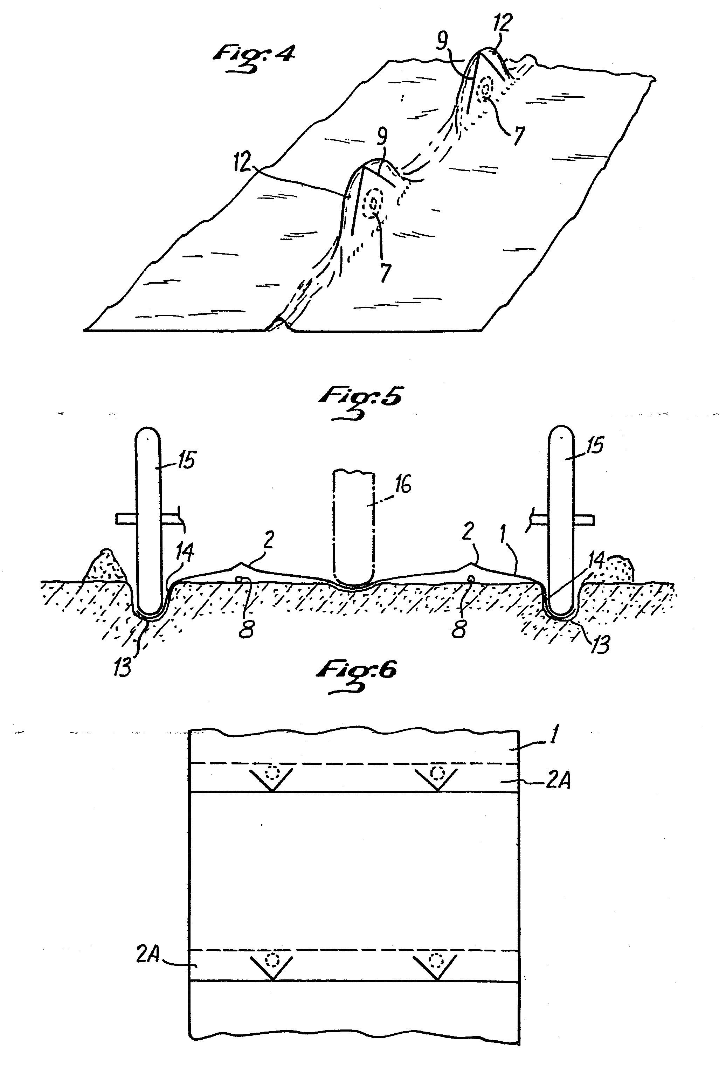

Quand les plis sont importants, en rapport avec la grosseur des graines, ils se couchent naturellement comme on le voit sur la figure 2 où on a écarté les traits pour la clarté du dessin. La figure 3 montre que l'on peut concevoir des plis 10 peu prononcés, restant dressés ou presque, comme des nervures. L'incision peut être une simple fente 11, longitudinale, dans le sens du sommet 5 du pli 10.

La figure 4 montre que les plis selon l'invention ne sont pas nécessairement continus. Avec un écartement plus important des graines, ou en fonction de la matière employée, on peut prévoir des pincements 12, alignés et espacés , dans chacun desquels on fait apparaître une poche 7 et une incision 9.

Une feuille plissée conformément à l'invention peut être livrée en rouleau. On la pose sur le sol en la déroulant, de façon connue en soi, en tournant les plis 2, 2A, 10, 12 avec leur ouverture dirigée vers le sol et en la soumettant à une traction dans le sens de l'ouverture de ces plis de façon à ouvrir totalement les poches 7. On emploie avantageusement au moins un outil qui appuie la feuille sur le sol et qui peut servir à l'immobiliser momentanément et périodiquement.

Avec des plis longitudinaux 2, on creuse dans le sol deux saignées 13 espacées convenablement à l'aide d'un premier outil, on force les parties extrêmes longitudinales opposées dans le fond des saignées 13 à l'aide de roues 15 auxquelles il est utile de donner une orientation oblique de façon à exercer la traction transversale souhaitée qui ouvre les plis 2. La figure 5 montre les plis 2 en cours d'ouverture, les poches 7 étant déjà déchirées et les graines 8 tombées sur le sol. Il peut être avantageux de serrer la feuille 1 sur le sol, entre les plis 2, à l'aide d'une roue centrale 16 représentée en trait mixte.

Il n'est pas impossible selon l'invention de prévoir sur la feuille 1 des plis transversaux 2A. Au moment de la pose, on immobilise périodiquement le rouleau sans arrêter le déplacement de la machine qui le porte, la feuille étant fermement ancrée à sa première extrémité reposant sur le sol, on crée ainsi, à chaque pli transversal, une traction qui ouvre ce dernier et les poches qui s'y trouvent.

Quand la feuille 1 est mise à sa position définitive, les plis étant totalement ouverts, elle est tendue sur le sol en recouvrant les graines 8 qui sont directement sur la terre sensiblement en-dessous des incisions 9.

0125997

## REVENDICATIONS

1. Feuille pour semis et paillage, ayant en des points espacés des poches (7) de retenue de semence et de graine, présentant des incisions (9) en correspondance avec ces poches (7), caractérisée en ce que les poches (7) sont réalisées par une ligne d'adhérence (6) destructible par traction des deux parois rapprochées (3, 4) d'un pli (2, 2A, 10, 12) de ladite feuille.

2. Feuille selon la revendication 1, caractérisée en ce que chaque pli (2, 10) est un pli continu en sens longitudinal de la feuille.

3. Feuille selon la revendication 1, caractérisée en ce que chaque pli (2A) est un pli continu en sens transversal de la feuille.

4. Feuille selon la revendication 1, caractérisée en ce que chaque pli (12) est un pincement localisé de la feuille.

5. Feuille selon l'une quelconque des revendications 1 à 4, caractérisée en ce que l'incision est pratiquée dans l'une au moins des deux parois (3, 4) du pli.

6. Feuille selon la revendication 5, caractérisée en ce que l'incision (9) est pratiquée en V dans les deux parois (3, 4) du pli, en partant du sommet (5) de celui-ci et contenant la poche (7) entre les branches de ce V.

7. Procédé pour la pose d'une feuille selon l'une quelconque des revendications 1 à 6, caractérisé en ce qu'on la pose avec l'ouverture des plis tournée vers le sol et on exerce une traction transversalement aux plis, de façon à ouvrir ceux-ci et les poches qui s'y trouvent.

8. Procédé selon la revendication 7, caractérisé en ce que, avec une feuille (1) à plis longitudinaux (2), on ouvre deux saignées espacées (13), on enfonce les parties extrêmes longitudinales opposées de la feuille (1) dans les saignées (13) en lui imposant une traction transversale, puis on referme lesdites saignées (13).

9. Procédé selon la revendication 8, caractérisé en ce qu'on serre la feuille (1) sur le sol dans sa partie centrale entre deux plis parallèles (2).

10. Procédé selon la revendication 7, caractérisé en ce que, avec une feuille (1) à plis transversaux (2A), on tire sur cette feuille en bloquant momentanément et périodiquement son déroulement tout en poursuivant l'avancement dans le sens du déroulage.

*Fig.1*

*Fig.2*

*Fig.3*

Fig. 4

Fig. 5

Fig. 6

**Office européen des brevets**

**0125997**
Numéro de la demande

**RAPPORT DE RECHERCHE EUROPEENNE**

EP 84 40 0954

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A-2 505 607 (MEIMARAKIS) <br> * Pages 3-6; figures 1-5 * | 1,2,8 | A 01 C 1/04 <br> A 01 G 13/02 |
| | --- | | |
| A | FR-A-1 496 643 (PIRELLI PLAST) <br> * Page 2, colonne de droite, paragraphes 10,11; page 3; fig-ures 1-6 * | 1 | |
| | --- | | |
| A | FR-A-1 094 995 (BORDES) | | |
| | --- | | |
| A | US-A-3 160 986 (WATSON) | | |
| | ----- | | |

**DOMAINES TECHNIQUES RECHERCHES (Int. Cl. 3)**

A 01 C
A 01 G

Le présent rapport de recherche a été établi pour toutes les revendications

| Lieu de la recherche <br> LA HAYE | Date d'achèvement de la recherche <br> 15-08-1984 | Examinateur <br> VERMANDER R.H. |
|---|---|---|